# EUROPEAN PATENT APPLICATION

(11) **EP 2 354 723 A2**
(43) Date of publication of application: **10.08.2011**
(21) Application number: 11150729.9
(22) Date of filing: 12.01.2011
(51) Int. Cl.: F25B 13/00, F25B 41/06

(54) **Refrigerant system**

(30) Priority: 08.02.2010 KR 20100011587
(71) Applicant: LG Electronics Inc., Seoul 150-721 (KR)
(72) Inventor: Yi, Haeyen, Seoul 153-802 (KR); Chung, Baikyoung, Seoul 153-802 (KR); Chang, Sedong, Seoul 153-802 (KR); Park, Junggyu, Seoul 153-802 (KR)
(74) Representative: Vossius & Partner

(57) **Abstract**

A refrigerant system is provided. The refrigerant system may use an electronic expansion valve (24) that electronically controls an opening degree thereof, as a high-pressure valve (31) and a low-pressure valve (32) to selectively block a high-pressure branch valve and a low-pressure branch valve. Accordingly, noise transmitted to an interior space may be minimized when the operation mode of the refrigerant system is switched. In addition, the structure of the refrigerant system may be simplified.

## Description

The present disclosure relates to a refrigerant system in which a refrigerant cycle is performed.

In general, a refrigerant system is a device that cools or heats an interior space by performing a refrigerant cycle including compression, condensation, expansion and evaporation of refrigerant.

The refrigerant system includes an indoor unit in which a refrigerant is heat-exchanged with indoor air and an outdoor unit in which a refrigerant is heat-exchanged with outdoor air. The indoor unit includes an indoor heat exchanger for performing heat-exchange between the refrigerant and the indoor air, a fan blowing the indoor air, and a motor rotating the fan. The outdoor includes an outdoor heat exchanger for performing heat-exchange between the refrigerant and the outdoor air, a fan for blowing the outdoor air, a motor for rotating the fan, a compressor for compressing the refrigerant, an expander for expanding the compressed refrigerant, and a 4-way valve for diverting a flow of the refrigerant.

When an interior space is cooled, the indoor heat exchanger operates as an evaporator, and the outdoor heat exchanger operates as a condenser. When the interior space is heated, the indoor heat exchanger operates as a condenser, and the outdoor heat exchanger operates as an evaporator. The 4-way valve diverts a refrigerant flow direction to switch the cooling and heating operations.

Embodiments provide a refrigerant system capable of minimizing interior noise when an operation mode is switched, while simplifying the structure thereof.

In one embodiment, a refrigerant system includes: an outdoor unit comprising an outdoor heat exchanger in which a refrigerant and outdoor air are heat-exchanged with each other and a compressor compressing the refrigerant, a plurality of indoor units, each comprising an indoor heat exchanger in which the refrigerant and indoor air are heat-exchanged with each other, a high-pressure tube guiding the refrigerant discharged from the compressor to the plurality of indoor heat exchangers, a low-pressure tube guiding the refrigerant evaporated in at least one of the indoor heat exchangers to the compressor, a high-pressure branch tube branched from the high-pressure tube to guide the refrigerant in the high-pressure tube to any one of the indoor heat exchangers, a low-pressure branch tube branched from the low-pressure tube to guide the refrigerant into the any one of the indoor heat exchangers to the low-pressure tube, an indoor unit tube connecting the any one of the indoor heat exchangers to both the high-pressure branch tube and the low-pressure branch tube, and a high-pressure valve and a low-pressure valve mounted on the high-pressure branch tube and the low-pressure branch tube to selectively block the refrigerant flows in the high-pressure branch tube and the low-pressure branch tube, respectively, wherein each of the high-pressure valve and the low-pressure valve comprises an electronic expansion valve to electronically control an opening degree thereof.

Fig. 1 is a view of a state in which cooling and heating operations are simultaneously performed in a refrigerant system according to an embodiment.

Fig. 2 is a view showing a flow of refrigerant while an indoor unit of the refrigerant system is operating in a heating mode.

Fig. 3 is a view showing the refrigerant flow while the indoor unit of the refrigerant system is switching from the heating mode to a cooling mode.

Fig. 4 is a view showing the refrigerant flow while the indoor unit of the refrigerant system is operating in the cooling mode.

Fig. 5 is a view showing the refrigerant flow while the indoor unit of the refrigerant system is switching from the cooling mode to the heating mode.

Fig. 6 is a view showing the refrigerant system operating in a full cooling mode.

Reference will now be made in detail to the embodiments of the present disclosure, examples of which are illustrated in the accompanying drawings.

In the following detailed description of the preferred embodiments, reference is made to the accompanying drawings that form a part hereof, and in which is shown by way of illustration specific preferred embodiments in which the invention may be practiced. These embodiments are described in sufficient detail to enable those skilled in the art to practice the invention, and it is understood that other embodiments may be utilized and that logical structural, mechanical, electrical, and chemical changes may be made without departing from the spirit or scope of the invention. To avoid detail not necessary to enable those skilled in the art to practice the invention, the description may omit certain information known to those skilled in the art. The following detailed description is, therefore, not to be taken in a limiting sense, and the scope of the present invention is defined only by the appended claims.

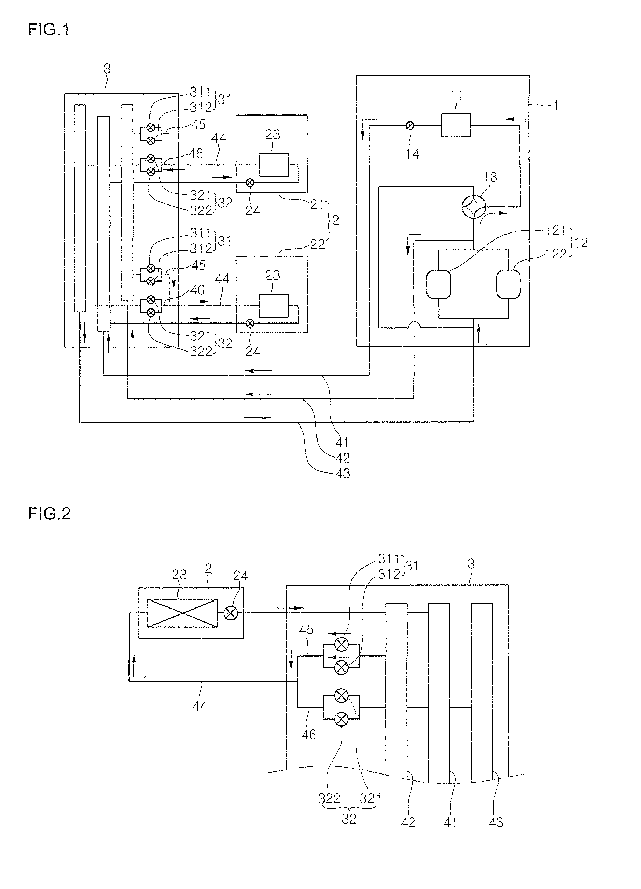

Fig. 1 is a view of a state in which cooling and heating operations are simultaneously performed in a refrigerant system according to an embodiment.

Referring to Fig. 1, a refrigerant system includes an outdoor unit 1 disposed in an outdoor space and exposed to outdoor air, a plurality of indoor units 2 disposed in an indoor space and exposed to indoor air, a distributor 3 connecting the outdoor unit 1 to the plurality of indoor units 2, and a refrigerant tube through which a refrigerant flows among the outdoor unit 1, the indoor units 2, and the distributor 3.

In detail, the outdoor unit 1 includes an outdoor heat exchanger 11 in which the indoor air and the refrigerant are heat-exchanged with each other, a compressor 12 compressing the refrigerant, a flow switch part 13 switching a flow direction of the refrigerant discharged from the compressor 12, and an outdoor expansion part 14 selectively expanding the refrigerant flowing into the outdoor heat exchanger 11.

The outdoor heat exchanger 11 is exposed to the outdoor air within the outdoor unit 11. The outdoor heat exchanger 11 may selectively serve as an evaporator evaporating the refrigerant or a condenser condensing the refrigerant according to operation modes of the refrigerant system.

The compressor 12 includes a constant speed compressor 121 operated at a constant speed to compress the refrigerant and an inverter compressor 122 operated at a variable speed to compress the refrigerant. The constant speed compressor 121 and the inverter compressor 122 are parallely connected to each other.

The flow switch part 13 is disposed in the refrigerant tube corresponding to a discharge side of the compressor 12. The flow switch part 13 allows the refrigerant tube connected to an inflow side of the compressor 12 to selectively communicate with the refrigerant tube connected to the outdoor heat exchanger 11 and the refrigerant tube corresponding to the discharge side of the compressor 12. That is, the refrigerant discharged from the compressor 12 may flow into the outdoor heat exchanger 11 and vice versa according to the switching operation of the flow switch part 13.

The outdoor expansion part 14 is disposed in the refrigerant tube corresponding to a position adjacent to the outdoor heat exchanger 11. Particularly, the outdoor expansion part 14 is disposed in the refrigerant tube connecting the outdoor heat exchanger 11 to the distributor 3. When the refrigerant system is operated to allow the outdoor heat exchanger 11 to serve as the evaporator, the refrigerant discharged from the distributor 3 may be expanded while it passes through the outdoor expansion part 14 before it flows into the outdoor heat exchanger 11.

Furthermore, the outdoor unit 1 may further include an outdoor fan (not shown) for forcibly blowing the outdoor air toward the outdoor heat exchanger 11 and an outdoor motor (not shown) for rotating the outdoor fan.

Each of the indoor units 2 includes an indoor heat exchanger 23 in which the indoor air and the refrigerant are heat-exchanged with each other and an indoor expansion part 24 for expanding the refrigerant flowing into the indoor heat exchanger 23. That is, the refrigerant system includes a plurality of the indoor heat exchangers 23 and a plurality of the indoor expansion parts 24 corresponding to the plurality of indoor heat exchangers 23 as a whole.

The distributor 3 is connected to both the outdoor unit 1 and the plurality of indoor units 2. The distributor distributes the refrigerant discharged from the outdoor unit 1 to the plurality of indoor units. Also, the distributor 3 switches a flow direction of the refrigerant within the indoor units 2 according to the operation mode of the refrigerant system.

The refrigerant tube includes a high-pressure tube 42 guiding the refrigerant discharged from the compressor 12 to the distributor 3, a low-pressure tube 43 guiding the refrigerant evaporated by at least one of the indoor units 2 to the compressor 12, and a liquid refrigerant tube 41 through which the refrigerant condensed within the indoor units 2 or the outdoor unit1 flows, and an indoor unit tube 44 connecting the distributor 3 to the indoor units 2.

The high-pressure tube 42, the low-pressure tube 43, and the liquid refrigerant tube 41 connect the outdoor unit 1 to the distributor 3. Also, the high-pressure tube 42 is branched from the refrigerant tube corresponding to the discharge side of the compressor 12 to extend up to the inside of the distributor 3. The low-pressure tube 43 is connected to the refrigerant tube corresponding to the inflow side of the compressor 12 to extend up to the inside of the distributor 3. Also, the liquid refrigerant tube 41 is connected to the outdoor expansion part 14 to extend up to the inside of the distributor 3.

The distributor 3 includes a plurality of high-pressure branch tubes 45 guiding the refrigerant within the high-pressure tube 42 to the plurality of indoor heat exchangers 23, a plurality of low-pressure branch tubes 46 guiding the refrigerant within the plurality of outdoor heat exchangers 11 to the low-pressure tube 43, and high-pressure and low-pressure valves 31 and 32 respectively selectively interrupting the refrigerant flows within the high-pressure and low-pressure branch tubes 45 and 46.

That is, the high-pressure branch tube 45 is branched from the high-pressure tube 42, and the low-pressure branch tube 46 is branched from the low-pressure tube 43. The high-pressure valve 31 and the low-pressure valve 32 are disposed in the high-pressure branch tube 45 and the low-pressure branch tube 46, respectively. The high-pressure valves 31 and the low-pressure valves 32 may include an electronic expansion valve capable of electronically controlling an opening degree thereof. The high-pressure valves 31 and the low-pressure valves 32 include electronic expansion valves 311, 312, 321 and 322 having different capacities from one another. More specifically, the high-pressure valves 31 include the first electronic expansion valve 311, and the second electronic expansion valve 312 having a smaller capacity than the first electronic expansion valve 311. The low-pressure valves 32 include the third electronic expansion valve 321, and the fourth electronic expansion valve 322 having a smaller capacity than the third electronic expansion valve 321. The first and the second electronic expansion valves 311 and 312 are mounted parallel on the high-pressure branch tube 45. The third and the fourth electronic expansion valves 321 and 322 are mounted in parallel on the low-pressure branch tube 46.

The indoor unit 44 has one end connected to the liquid refrigerant tube 41 and the other end connected to both the high-pressure branch tube 45 and the low-pressure branch tube 46. The indoor heat exchanger 23 and the indoor expansion part 24 are mounted on the indoor unit tube 44. That is, the indoor unit tube 44 connects the indoor heat exchanger 23, the high-pressure branch tube 45, and the low-pressure branch tube 46 to one another.

Also, according to the operation mode of the indoor unit 2, the refrigerant in the liquid refrigerant tube 41 may sequentially pass through the indoor expansion part 24 and the indoor heat exchanger 23 to flow into the low-pressure branch tube 46, or the refrigerant in the high-pressure branch tube 45 may sequentially pass through the indoor heat exchanger 23 and the indoor expansion part 24 to flow into the liquid refrigerant tube 41.

The outdoor expansion part 14 and the indoor expansion part 24 may also include an electronic expansion valve that controls an opening degree thereof according to the operation mode of the refrigerant system.

Hereinafter, a flow of the refrigerant in the refrigerant system according to an embodiment will be described in detail with reference to the accompanying drawings.

Referring to FIG. 1, in the refrigerant system, the plurality of indoor units 2 may be operated in different operation modes simultaneously. Fig. 1 shows a refrigerant flow in a case where the outdoor heat exchanger 11 serves as a condenser, a first indoor unit 21 of the indoor units 2 is operated in a heating mode, and a second indoor unit 22 is operated in a cooling mode.

The refrigerant discharged from the compressor 12 is introduced into the outdoor heat exchanger 11 by the flow switch part 13. Here, a part of the refrigerant discharged from the compressor 12 flows into the high-pressure tube 42.

First, the refrigerant introduced into the outdoor heat exchanger 11 emits heat to the outdoor air while passing through the outdoor heat exchanger 11, thereby being condensed. The refrigerant passed through the outdoor heat exchanger 11 flows into the liquid refrigerant tube 41. At this process, even through the refrigerant passes through the outdoor expansion part 14, the refrigerant passes through the outdoor expansion part 14 without changing a phase thereof because the outdoor expansion part 14 is fully opened.

The refrigerant flowed into the liquid refrigerant tube 41 flows toward the first indoor unit 21 along the indoor unit tube 44 of the first indoor unit 21. The refrigerant flowed into the first indoor unit 21 is expanded while passing through the indoor expansion part 24 of the first indoor unit 21. The refrigerant passed through the indoor expansion part 24 absorbs heat from the indoor air while passing through the indoor heat exchanger 23 of the first indoor unit 21, thereby being evaporated. That is, the first indoor unit 21 is operated in the cooling mode.

Furthermore, the refrigerant passed through the indoor heat exchanger 23 of the first indoor unit 21 is introduced into the low-pressure tube 43 along the low-pressure branch tube 46 corresponding to the first indoor unit 21. Here, the high-pressure valves 31 corresponding to the first indoor unit 21 are maintained in a closed state whereas the low-pressure valves 32 corresponding to the first indoor unit 21 are maintained in an opened state. Therefore, the refrigerant discharged from the indoor heat exchanger 23, that is, the first indoor unit 21 may all smoothly flow into the low-pressure tube 43.

The refrigerant flowing into the low-pressure tube 43 passes through the compressor 12 and therefore compressed again.

The refrigerant discharged from the compressor 12 and flowed into the high-pressure tube 42 passes through the high-pressure branch tube 45 corresponding to the second indoor unit 22, and then flows into the indoor unit tube 44 of the second indoor unit 22. At this process, the low-pressure valves 32 corresponding to the second indoor unit 22 are maintained in a fully closed state, and the high-pressure valves 31 corresponding to the second indoor unit 22 are maintained in a fully opened state. Therefore, the refrigerant passed through the high-pressure tube 42 and the high-pressure branch tube 45 may all smoothly flow to the indoor heat exchanger 23, that is, the second indoor unit 22.

The refrigerant emits heat to the indoor air while it passes through the indoor heat exchanger 23 of the second indoor unit 22, thereby being condensed. In other words, the second indoor unit 22 is operated in the heating mode. The refrigerant passed through the indoor heat exchanger 23 flows into the liquid refrigerant tube 41 through the indoor unit tube 44. Here, even though the refrigerant passed through the indoor heat exchanger 23 passes through the indoor expansion part 24, the refrigerant passes through the indoor expansion part 24 without changing a phase thereof because the indoor expansion part 24 is fully opened.

The refrigerant flowed into the liquid refrigerant tube 41 is mixed with the refrigerant flowing from the outdoor unit 1 to the distributor 3. As described above, the mixed refrigerant passes through the first indoor unit 21, flows into the compressor 12 through the low-pressure tube 43, and is compressed again.

The outdoor heat exchanger 11 may function as a condenser or an evaporator according to the operation mode of the indoor units 2. For example, the outdoor heat exchanger 11 functions as the condenser when all the indoor units 2 are operated in the cooling mode, or as the evaporator when all the indoor units 2 are operated in the heating mode.

When the outdoor heat exchanger 11 functions as the condenser, the flow switch part 13 is configured to provide fluid communication between the refrigerant tube connected to the outdoor heat exchanger 11 and the refrigerant tube connected to the discharge side of the compressor 12. When the outdoor heat exchanger 11 functions as the evaporator, the flow switch part 13 is configured to provide fluid communication between the refrigerant tube connected to the outdoor heat exchanger 11 and the refrigerant tube connected to the intake side of the compressor 12.

With respect to the liquid refrigerant tube 41, the refrigerant in the liquid refrigerant tube 41 flows toward the distributor 3 and the indoor units 2 when the outdoor heat exchanger 11 functions as the condenser. On the other hand, when the outdoor heat exchanger 11 functions as the evaporator, the refrigerant in the liquid refrigerant tube 41 flows toward the outdoor unit 1.

The operation mode of the indoor units 2 may be switched into any one of the cooling mode and the heating mode according to opening and closing operations of the high-pressure valves 31 and the low-pressure valves 32. For example, when the high-pressure valves 31 are closed and the low-pressure valves 32 are opened in the first indoor unit 21, the first indoor unit 21 is operated in the cooling mode. However, when the low-pressure valves 32 are closed and the high-pressure valves 31 are opened in the second indoor unit 22, the second indoor unit 22 is operated in the heating mode. That is, any one of the indoor units 2 may be operated in the cooling mode or the heating mode according to opening and closing operations of the high-pressure valves 31 and the low-pressure valves 32 of the corresponding indoor unit 2.

Hereinafter, a process of switching the operation mode in the refrigerant system will be described in detail with reference to the accompanying drawings.

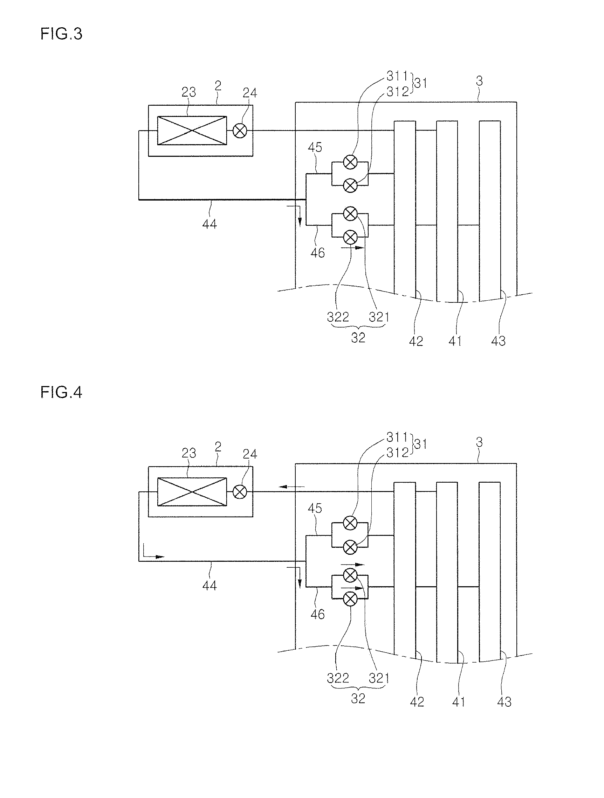

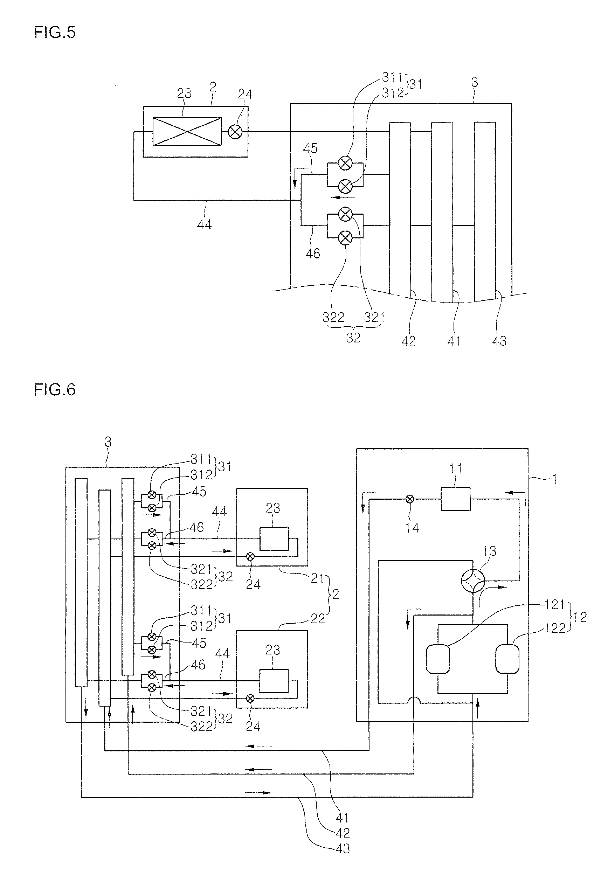

Fig. 2 shows a flow of the refrigerant while the indoor unit of the refrigerant system is operating in the heating mode. Fig. 3 shows the refrigerant flow while the indoor unit of the refrigerant system is switching from the heating mode to the cooling mode. Fig. 4 shows the refrigerant flow while the indoor unit of the refrigerant system is operating in the cooling mode, and Fig. 5 shows the refrigerant flow while the indoor unit of the refrigerant system is switching from the cooling mode to the heating mode.

Referring to Fig. 2, the high-pressure valves 31 are opened whereas the low-pressure valves 32 are closed during the heating mode of the indoor unit 2.

Accordingly, the refrigerant in the high-pressure tube 42 flows into the indoor unit tube 44 through the high-pressure branch tube 45. The refrigerant flowed into the indoor unit tube 44 emits heat to the indoor air while passing through the indoor heat exchanger 23, thereby being condensed. Next, the refrigerant passed through the indoor heat exchanger 23 flows into the liquid refrigerant tube 41 through the indoor unit tube 44.

However, in some cases, the indoor unit 2 may be switched from the heating mode to the cooling mode during the operation of the refrigerant system.

Referring to Figs. 3 and 4, when the heating mode of the indoor unit 2 is switched to the cooling mode, the indoor expansion part 24, the high-pressure valves 31, and the low-pressure valves 32 are all closed first. Therefore, a high-pressure refrigerant is shut in the refrigerant tube disposed among the indoor expansion part 24, the high-pressure valves 31 and the low-pressure valves 32.

Next, the third electronic expansion valve 321 of the low-pressure valves 32 is maintained in the closed state, and the fourth electronic expansion valve 322 is opened. As a result, the high-pressure refrigerant shut in the refrigerant tube among the indoor expansion part 24, the high-pressure valves 31, and the low-pressure valves 32 flows into the low-pressure tube 43 through the low-pressure branch tube 46 having a relatively low pressure.

As the fourth electronic expansion valve 322 is opened, the refrigerant tube among the indoor expansion part 24, the high-pressure valves 31, and the low-pressure valves 32 is balanced in pressure with the low-pressure tube 43. Accordingly, the indoor expansion part 24 and the third electronic expansion valve 321 are also opened. The refrigerant in the liquid refrigerant tube 41 flows into the low-pressure branch tube 46 having a relatively low pressure through the indoor unit tube 44. That is, the refrigerant flows into the low-pressure branch tube 46 after it sequentially passes through the indoor expansion part 24 and the indoor heat exchanger 23.

Here, the indoor expansion part 24 is partially opened to allow the refrigerant to expand and flow. More specifically, the refrigerant is expanded while passing through the indoor expansion part 24 and then flows into the indoor heat exchanger 23. In addition, the refrigerant absorbs heat from the indoor air while passing through the indoor heat exchanger 23. That is, the indoor unit 2 operates in the cooling mode. The flow of refrigerant in the cooling mode of the indoor unit 2 is illustrated in Fig. 4.

The indoor unit 2 may be switched from the heating mode to the cooling mode through the above-described processes.

Also, in some cases, the indoor unit 2 may be switched from the cooling mode to the heating mode during the operation of the refrigerant system.

Referring to Figs. 2 and 5, when the cooling mode of the indoor unit 2 is switched to the heating mode, the indoor expansion part 24, the high-pressure valves 31 and the low-pressure valves 32 are all closed first. Therefore, a low-pressure refrigerant is shut in the refrigerant tube disposed among the indoor expansion part 24, the high-pressure valves 31 and the low-pressure valves 32.

The first electronic expansion valve 311 of the high-pressure valves 31 is maintained in the closed state whereas the second electronic expansion valve 312 is opened. As a result, the low-pressure refrigerant in the high-pressure tube 42 flows into the refrigerant tube having a relatively low pressure and disposed among the indoor expansion part 24, the high-pressure valves 31 and the low-pressure valves 32 through the high-pressure branch tube 45.

As the second electronic expansion valve 312 is opened, the refrigerant tube disposed among the indoor expansion part 24, the high-pressure valves 31 and the low-pressure valves 32 is balanced in pressure with the high-pressure tube 42. Accordingly, the indoor expansion part 24 and the third electronic expansion valve 321 are also opened. Therefore, the refrigerant in the high-pressure tube 42 flows into the liquid refrigerant tube 41 having a relatively low pressure through the indoor unit tube 44. That is, the refrigerant flows into the liquid refrigerant tube 41 after it sequentially passes through the indoor heat exchanger 23 and the indoor expansion part 24.

Here, since the indoor expansion part 24 is fully opened, the refrigerant may pass through the indoor expansion part 24 without a phase change. Also, the refrigerant emits heat to the indoor air while passing through the indoor heat exchanger 23. That is, the indoor unit 2 operates in the heating mode. The flow of refrigerant in the heating mode of the indoor unit 2 is illustrated in Fig. 2.

The indoor unit 2 may switch from the cooling mode to the heating mode through the above processes.

According to the above-structured refrigerant system, noise generated from the indoor heat exchanger 23, that is, the indoor unit 2 may be minimized during switching between the cooling mode and the heating mode.

In further detail, when the indoor unit 2 switches from any one of the cooling mode and the heating mode to the other, the high-pressure refrigerant and the low-pressure refrigerant are mixed according the opening and closing of the high-pressure valves 31 and the low-pressure valves 32.

When the operation mode of the indoor unit 2 is switched by the refrigerant system, the second electronic expansion valve 312 having a relatively small capacity of the high-pressure valves 31 or the fourth electronic expansion valve 322 having a smaller capacity of the low-pressure valves 32 is opened first. Therefore, the high-pressure refrigerant and the low-pressure refrigerant are mixed more slowly with each other. As a consequence, impact and noise caused when the high-pressure refrigerant and the low-pressure refrigerant are mixed may be minimized.

Furthermore, impact and noise transmitted to the interior space through the indoor unit tube 44 may also be minimized.

Hereinafter, a process of preventing exhaustion of the refrigerant while the refrigerant system is operating in a full cooling mode will be described in detail with reference to the accompanying drawings.

Fig. 6 is a view showing the refrigerant system operating in a full cooling mode.

Referring to Fig. 6, when the refrigerant system is in the full cooling mode, the refrigerant condensed in the outdoor heat exchanger 11 flows into all the indoor units 2 through the liquid refrigerant tube 41. The refrigerant in the liquid refrigerant tube 41 all flows into the indoor unit tube 44 and absorbs heat from the indoor air while it passes through the indoor heat exchangers 23.

In this process, since the low-pressure valves 32 and the second electronic expansion valves 312 of the high-pressure valves 31 are maintained in the opened state, the refrigerant passed through the indoor heat exchangers 23 flows to the low-pressure tube 43 through the low-pressure branch tubes 46.

Here, regarding each of the indoor units 2, the refrigerant in the high-pressure branch tube 45 has a high temperature and a high pressure. On the other hand, the refrigerant in the indoor unit tube 44 and the low-pressure branch tube 46, which correspond to a downstream of the indoor heat exchanger 23, has a low temperature and a low pressure. Therefore, the refrigerant in the high-pressure branch tube 45 adjacent to the indoor unit tube 44 and the low-pressure branch tube 46 is cooled by the refrigerant in the indoor unit tube 44 and the low-pressure branch tube 46. Accordingly, a liquid refrigerant condensed by the refrigerant in the indoor unit tube 44 and the low-pressure branch tube 46 may be generated in the high-pressure branch tube 45. Since the refrigerant in the high-pressure branch tube 45 is relatively stagnant with respect to the entire refrigerant system, an actual flow amount of the refrigerant may be reduced if the liquid refrigerant is generated in the high-pressure branch tube 45.

However, since the second electronic expansion valve 312 of the high-pressure valves 31 is in the opened state, the liquid refrigerant generated in the high-pressure branch tube 45 may pass through the second electronic expansion valve 312 and flow into the low-pressure branch tube 46. Therefore, deterioration of the overall performance and efficiency of the refrigerant system due to the stagnant refrigerant in the high-pressure branch tube 45 may be minimized. On the contrary, the performance and efficiency may be rather improved when compared to the case in which the high-pressure valves 31 are all closed during the full cooling mode of the refrigerant system.

Moreover, according to the refrigerant system, the high-pressure valves 31 that open and close the high-pressure branch tube 45 and the low-pressure valves 32 that open and close the low-pressure branch tube 46 may not only reduce the impact and noise caused by a pressure difference between the refrigerants during the switching of the operation mode of the indoor units 2, but also allow the liquid refrigerant to flow from the high-pressure branch tube 45 to the low-pressure branch tube 46.

As a consequence, the structure of the refrigerant system may be even simplified when compared to the case in which a separate structure for reducing the impact and noise and a separate structure for introducing the liquid refrigerant are further provided.

## Claims

1. A refrigerant system comprising:
an outdoor unit comprising an outdoor heat exchanger in which a refrigerant and outdoor air are heat-exchanged with each other and a compressor compressing the refrigerant;
a plurality of indoor units, each comprising an indoor heat exchanger in which the refrigerant and indoor air are heat-exchanged with each other;
a high-pressure tube guiding the refrigerant discharged from the compressor to the plurality of indoor heat exchangers;
a low-pressure tube guiding the refrigerant evaporated in at least one of the indoor heat exchangers to the compressor;
a high-pressure branch tube branched from the high-pressure tube to guide the refrigerant in the high-pressure tube to any one of the indoor heat exchangers;
a low-pressure branch tube branched from the low-pressure tube to guide the refrigerant in the any one of the indoor heat exchangers to the low-pressure tube;
an indoor unit tube connecting the any one of the indoor heat exchangers to both the high-pressure branch tube and the low-pressure branch tube; and
a high-pressure valve and a low-pressure valve mounted on the high-pressure branch tube and the low-pressure branch tube to selectively block the refrigerant flows in the high-pressure branch tube and the low-pressure branch tube, respectively,
wherein each of the high-pressure valve and the low-pressure valve comprises an electronic expansion valve to electronically control an opening degree thereof.

2. The refrigerant system according to claim 1, wherein at least one of the high-pressure valve and the low-pressure valve comprises two electronic expansion valves having capacities different from each other.

3. The refrigerant system according to claim 1, wherein the high-pressure valve comprises a first electronic expansion valve and a second electronic expansion valve having a smaller capacity than the first electronic expansion valve, and
the low-pressure valve comprises a third electronic expansion valve and a fourth electronic expansion valve having a smaller capacity than the third electronic expansion valve.

4. The refrigerant system according to claim 3, wherein, when the indoor unit is switched to a heating mode, the first electronic expansion valve is closed and the refrigerant in the high-pressure branch tube flows to any one of the indoor heat exchangers through the second electronic expansion valve.

5. The refrigerant system according to claim 3, wherein, when the indoor unit is switched to a cooling mode, the third electronic expansion valve is closed and the refrigerant in any one of the indoor heat exchangers flows into the low-pressure branch tube through the fourth electronic expansion valve.

6. The refrigerant system according to claim 1, wherein the high-pressure valve comprises a first electronic expansion valve and a second electronic expansion valve which are mounted in parallel on the high-pressure branch tube, and
the low-pressure valve comprises a third electronic expansion valve and a fourth electronic expansion valve which are mounted in parallel on the low-pressure branch tube.

7. The refrigerant system according to claim 6, wherein the second electronic expansion valve and the fourth electronic expansion valve have smaller capacities than the first electronic expansion valve and the third electronic expansion valve, respectively.

8. The refrigerant system according to claim 7, wherein the second electronic expansion valve is first opened, and then the second electronic expansion valve is opened when the indoor unit is switched to a heating mode.

9. The refrigerant system according to claim 8, wherein all of the high-pressure valve and the low-pressure valve are closed before the second electronic expansion valve is opened when the indoor unit is switched to the heating mode.

10. The refrigerant system according to claim 7, wherein the fourth electronic expansion valve is first opened and then the third electronic expansion valve is opened, when the indoor unit is switched to a cooling mode.

11. The refrigerant system according to claim 10, wherein all of the high-pressure valve and the low-pressure valve are closed before the fourth electronic expansion valve is opened, when the indoor unit is switched to the cooling mode.

12. The refrigerant system according to claim 1, wherein the high-pressure valve is partially opened when all of the plurality of indoor units operate in a cooling mode.

13. The refrigerant system according to claim 12, wherein the high-pressure valve comprises a first electronic expansion valve and a second electronic expansion valve having a smaller capacity than the first electronic expansion valve, and
the second electronic expansion valve is partially opened when all of the plurality of indoor units operate in the cooling mode.

14. The refrigerant system according to any of claims 1 to 13, further comprising at least one distributor connecting the outdoor unit to the indoor units, to which the high-pressure tube, the low-pressure tube, the high-pressure branch tube, and the low-pressure branch tube are fixed.

15. The refrigerant system according to claim 14, wherein the distributor comprises four pairs of high-pressure tube and low-pressure tube to connect four indoor units to distributor.
